# FASCICULE DE BREVET EUROPEEN

(11) **EP 0 844 031 B1**
(45) Date de publication et mention de la délivrance du brevet: **09.05.2001**
(21) Numéro de dépôt: 97402831.8
(22) Date de dépôt: 25.11.1997
(51) Int. Cl.: B09B 1/00, E02D 31/00, C02F 9/00

(54) **Système de traitement et d'évacuation de l'eau souterraine provenant d'un site pollué isolé du site environnant par une paroi étanche réalisée dans le sol**
System zur Behandlung und Abführung von Grundwasser aus einem verunreinigten und von der Umgebung durch eine Dichtwand im Boden isolierten Standort
System for treating and discharging groundwater from a polluted site isolated from the environment by an impervious wall in the soil

(30) Priorité: 26.11.1996 FR 9614468
(43) Date de publication de la demande: 27.05.1998
(73) Titulaire: SOLETANCHE BACHY FRANCE, 92000 Nanterre (FR)
(72) Inventeur: Esnault Filet, Annette Marie Claude, 77590 Chartrettes (FR); Gandais, Michel Auguste Georges, 77930 Saint Sauveur Sur Ecole (FR); Deniau, Alain Maurice, 94000 Creteil (FR); Dufournet Bourgeois, Françoise Marie, 75018 Paris (FR)
(74) Mandataire: Colas, Jean-Pierre

(56) Documents cités:
- WO-A-93/04237
- WO-A-93/22241
- WO-A-96/31660
- DE-A- 3 717 884
- US-A- 4 863 312
- US-A- 5 354 149

## Description

L'invention concerne un système de traitement et d'évacuation de l'eau souterraine provenant d'un site pollué isolé du site environnant par une paroi étanche réalisée dans le sol.

Il est connu d'isoler un site de décharge ou une usine potentiellement polluante du site environnant en réalisant une paroi étanche ceinturant ledit site ou ladite usine et s'étendant depuis la surface jusqu'à une couche profonde du terrain étanche, par exemple une couche d'argile.

Du fait de cette isolation, de l'eau polluée peut s'accumuler à l'intérieur du site isolé avec pour conséquence la création d'une différence entre les niveaux des nappes d'eau souterraine de part et d'autre de la paroi étanche. Ceci génère une poussée sur la paroi étanche, ce qui peut occasionner des fissures ou autres dommages à la paroi étanche laissant fuir de l'eau polluée dans l'environnement, avec les conséquences dommageables que l'on peut imaginer. De toute façon, la paroi n'étant jamais totalement étanche, on peut craindre une percolation d'eau polluée lorsque le niveau d'eau à l'intérieur du site est supérieur au niveau d'eau à l'extérieur.

Il serait donc souhaitable de disposer d'un système qui évite qu'il se produise des différences de niveau entre les nappes aqueuses situées en dedans et en dehors du site isolé, tout en évitant en même temps de polluer le site environnant, ce qui serait le cas si on se contentait d'évacuer l'eau du site isolé vers l'extérieur.

La présente invention vise à satisfaire ce besoin en fournissant un système qui non seulement permet d'équilibrer les niveaux d'eau souterraine entre l'intérieur du site isolé et l'extérieur, mais aussi de dépolluer l'eau sortant du site isolé avec une efficacité optimale grâce à un agencement particulier.

Plus particulièrement, l'invention concerne un système de traitement de l'eau souterraine polluée provenant d'un site polluant isolé du site environnant par une paroi étanche (2) réalisée dans le sol, et d'évacuation de l'eau souterraine traitée vers le site environnant, qui comprend une tranchée drainante (10) s'étendant dans le site isolé et servant à collecter l'eau souterraine, au moins une cellule de traitement (22-24), prévue dans le sol, communiquant avec l'extrémité aval de la tranchée drainante et destinée à traiter l'eau collectée par ladite tranchée, et des moyens d'évacuation (30) de l'eau traitée dans le site environnant, caractérisé en ce que chaque cellule (22-24) est intercalée entre des panneaux (25-28) dans chacun desquels est prévu un passage (29) permettant à l'eau de s'écouler à travers ladite cellule, lesdits passages étant situés à des niveaux différents d'un panneau à l'autre.

De préférence, le système comprend plusieurs cellules de traitement distinctes, reliées en série, garnies de matières de traitement perméables, similaires ou différentes.

De préférence aussi le système comporte un moyen empêchant que de l'eau souterraine venant de l'extérieur du site ne s'écoule dans le site à travers la ou les cellules de traitement.

Selon un mode de réalisation particulier préféré, la ou les cellules de traitement sont disposées entre deux parois étanches moulées dans le sol, sensiblement parallèles, délimitant un passage relié à une de ses extrémités à ladite tranchée drainante et à l'autre extrémité auxdits moyens d'évacuation.

De préférence, les moyens d'évacuation de l'eau traitée comprennent une tranchée drainante répartissant l'eau traitée dans le terrain du site environnant.

De préférence également, le système comporte, en outre, un passage supplémentaire- prévu à un niveau de la paroi étanche inférieur à celui de la nappe aquifère et en un point espacé du reste du système, ledit passage étant pourvu d'un moyen, tel qu'un clapet, ne laissant passer l'eau que de l'extérieur vers l'intérieur du site isolé.

Le système de l'invention est implantable dans tous les sites potentiellement polluants tels qu'un site de décharge pour déchets, une usine de traitement d'hydrocarbures, une usine chimique, etc.....

La description qui va suivre en regard des dessins annexés, fera bien comprendre comme l'invention peut être réalisée.
La figure 1 est une vue schématique en élévation d'un site de décharge équipé d'un système selon l'invention ;
la figure 2 est une vue en coupe verticale selon la ligne II-II de la figure 1 ;
la figure 3 est une vue en coupe verticale selon la ligne III-III de la figure 1 ; et
la figure 4 est une vue schématique en perspective d'un élément tubulaire utile pour la réalisation du système des figures 1 et 2.

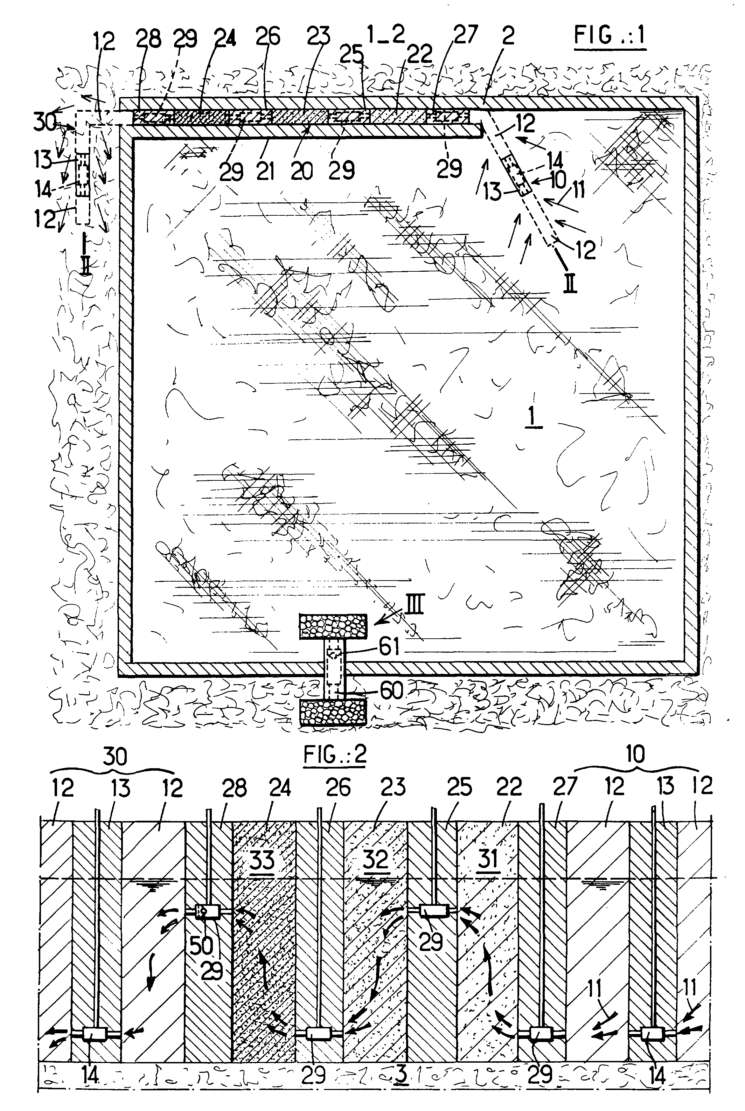

Sur les figures 1 et 2 est représenté un site 1 faisant office de décharge, par exemple pour des déchets industriels. Ce site 1 est délimité par une paroi étanche 2, moulée dans le sol et s'étendant jusqu'à une profondeur où elle rejoint une couche de terrain étanche 3, par exemple une couche d'argile. Des profondeurs typiques sont de 5 à 50 m de profondeur. La paroi étanche 2 peut se prolonger au-dessus du niveau du sol et/ou du terrain peut être excavé à l'intérieur du site 1 pour ménager un volume apte à recevoir les déchets.

Le système selon l'invention, qui équipe ce site de décharge comprend une tranchée drainante 10 qui sert à collecter l'eau souterraine polluée, représentée par les flèches 11, du site de décharge. Cette tranchée drainante peut être de n'importe quel type. Un type particulier de tranchée drainante appropriée est celui décrit dans la demande WO97/49871.

Cette tranchée drainante est constituée, comme l'illustrent les figures 1 et 2, de panneaux élémentaires 12 remplis d'un matériau filtrant, c'est-à-dire perméable, et séparés les uns des autres par un panneau intermédiaire 13 moulé dans le sol dans lequel est prévu un élément tubulaire 14 mettant en communication les panneaux 12 adjacents.

A l'extrémité aval de la tranchée drainante, l'eau souterraine arrive dans une unité de traitement 20. Cette unité est disposée entre la paroi étanche 2 et une paroi étanche 21 parallèle à la paroi 2 et comporte, par exemple, trois cellules de traitement 22, 23 et 24 entre lesquelles sont prévus des panneaux 25 et 26 moulés dans le sol, par exemple en coulis durci. Des panneaux 27 et 28 semblables aux panneaux 25 et 26 sont prévus également à l'entrée et à la sortie, respectivement, de l'unité 20. Les panneaux 25, 26, 27 et 28 comportent des passages 29 prévus entre l'extrémité aval de la tranchée de drainage et la cellule 22, entre la cellule 22 et la cellule 23, entre la cellule 23 et la cellule 24, et entre la cellule 24 et une deuxième tranchée drainante 30 réalisée dans le site environnant, en dehors de la paroi étanche 2, et dont la fonction est de distribuer l'eau traitée dans l'unité 20 dans le terrain environnant le site de décharge. Cette tranchée drainante 30 peut être d'une réalisation semblable à celle de la tranchée drainante 10.

Chacune des cellules 22-24 est remplie d'une matière de traitement, qui peut être identique ou différente des matières actives remplissant les autres cellules. Par "matière de traitement" on désigne une matière ayant des propriétés d'absorption, d'adsorption ou de réactivité chimique ou biologique qui lorsqu'elle est mise en contact avec l'eau polluée à traiter la débarrasse totalement ou partiellement d'au moins un des agents la contaminant. Le choix de la ou des matière(s) active(s) dépend de la pollution rencontrée et rentre dans le domaine de compétence de l'homme du métier. L'invention n'est pas liée à l'emploi d'une matière de traitement particulière. Des exemples de matières de traitement peuvent être trouvés dans les brevets américains 5 534 154, 5 362 394 et 5 514 279.

Les passages 29 autorisent le passage de l'eau à travers les différentes cellules de traitement tout en évitant que les matières de traitement contenues dans ces cellules ne se mélangent entre elles.

Comme montré sur la figure 2 les passages 29 sont alternativement disposés à un niveau relativement bas et à un niveau relativement haut des panneaux 25-28 de façon que l'eau à traiter suive un chemin onduleux dans l'unité 20. Ceci a pour effet d'accroître le temps de contact de l'eau polluée avec la matière de traitement garnissant chaque cellule, par rapport à ce que serait ce temps de contact si les passages 29 étaient tous au même niveau.

L'unité 20 peut être réalisée comme suit, la paroi étanche 2 étant supposée être déjà construite.

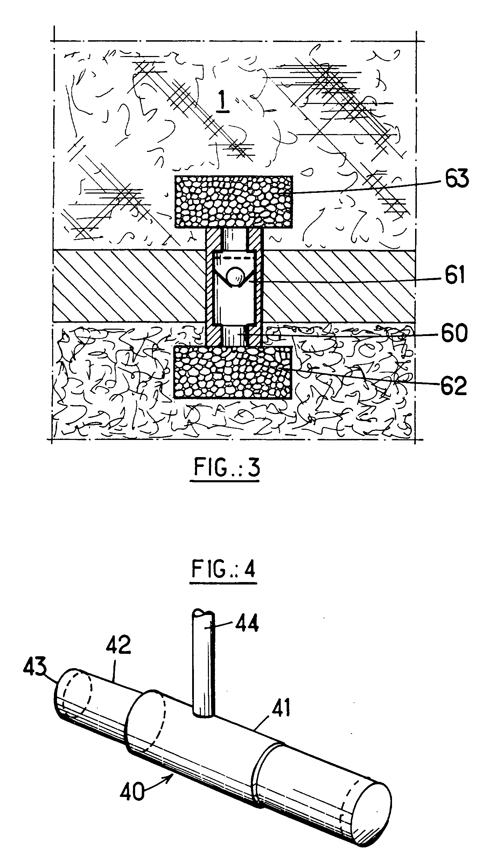

On commence par réaliser, parallèlement à la paroi 2, une paroi étanche 21 de la longueur désirée pour l'unité. Puis on effectue les excavations correspondant aux panneaux 25-28 en opérant, de manière classique, sous fluide d'excavation durcissable. On met alors en place dans chacune de ces excavations remplies de boue, au niveau désiré, un élément tubulaire 40 tel que représenté sur la figure 4. Cet élément tubulaire 40 comprend une partie centrale 41 en métal, dans laquelle est enfilé, de façon centrée, un conduit 42, clos à ses extrémités par des opercules 43, en matière plastique, de longueur supérieure à celle de la partie 41, mais légèrement inférieure à la longueur de chacune des excavations. L'élément 40 comporte en outre un tube 44 perpendiculaire à la partie centrale 41, raccordé à celle-ci et communiquant avec l'intérieur du conduit 42 grâce à des perçages adéquats prévus sur la partie centrale et le conduit 42 et s'étendant jusqu'au-dessus de la surface du sol. Le rôle du tube 44 est de permettre la vérification et la maintenance des passages 29. En cas d'obstruction, on peut, par exemple, déboucher le passage en introduisant de l'air comprimé par le tube 44. L'élément 40 est orienté sensiblement parallèlement à la direction de la tranchée.

On laisse ensuite le fluide d'excavation faire prise dans les excavations avec comme résultat la formation de panneaux intermédiaires moulés dans le sol et enrobant les éléments 40.

L'étape suivante consiste à exécuter des excavations entre les panneaux intermédiaires précédemment réalisés à l'emplacement des cellules 22-24, à l'aide d'un outil approprié, tel qu'une benne d'excavation ou équivalent, en faisant en sorte que l'outil vienne remordre les côtés des panneaux intermédiaires tournés vers l'excavation en cours d'exécution. Ce faisant l'outil vient rompre notamment les extrémités du conduit 42 en matière plastique, éliminant notamment les opercules 43 et venant ainsi ménager les passages 29. Une fois ces excavations terminées, elles peuvent être remplies avec la matière de traitement choisie.

Le passage 29 ménagé dans le panneau 28 comporte, en outre, un aménagement supplémentaire, à savoir un clapet 50, par exemple de type à bille, faisant en sorte que l'écoulement de l'eau ne puisse se faire que de l'intérieur du site de décharge vers l'extérieur.

Le système comporte, en outre, comme illustré plus en détail sur la figure 3, mais de façon facultative, un passage 60 prévu à travers la paroi étanche 2, en un point distant de l'unité 20, pourvu d'un clapet 61, par exemple du type à bille, ne laissant passer l'eau que de l'extérieur vers l'intérieur du site de décharge. Ce passage 60 débouche à ses extrémités dans des tranchées drainantes 62 et 63 remplies d'un matériau perméable. L'ensemble 60-63 peut être réalisé comme décrit dans la demande de brevet français No. 96 14021 déposée le 18 Novembre 1996 par la Demanderesse et dont une copie est annexée au dossier de la présente demande.

Le fonctionnement du système de l'invention est très simple et repose sur les différences de niveau qui s'établissent naturellement entre les eaux souterraines présentes à l'intérieur du site 1 et à l'extérieur de celui-ci.

### 1er CAS :

Niveau d'eau extérieur plus bas que le niveau intérieur : L'eau collectée par la tranchée drainante 10 va s'écouler vers l'unité 20, traverser successivement les cellules 22-24 où elle va être dépolluée, et arriver dans la tranchée drainante 30 d'où elle va être répartie dans le terrain environnant. L'écoulement de l'eau polluée et son traitement vont se poursuivre jusqu'à égalisation des niveaux d'eau extérieur et intérieur. Pendant cette phase, le clapet 61 est fermé et il ne passe aucun courant d'eau par le passage 60.

### 2ème CAS :

Niveau d'eau extérieur supérieur au niveau d'eau à l'intérieur du site :

Aucun flux d'eau ne traverse l'unité 20, le clapet 50 empêchant tout écoulement d'eau de l'extérieur vers l'intérieur du site, à travers cette unité.

Par contre, il s'établit à travers le passage 60 un courant d'eau non polluée venant de l'extérieur vers l'intérieur du site et se poursuivant jusqu'à égalisation des niveaux des deux côtés de la paroi étanche 2.

Il est à noter que l'ensemble 60-63 n'a qu'un caractère optionnel, quoi que préféré, et pourrait être omis si le fait que le niveau d'eau extérieur soit plus élevé que le niveau d'eau intérieur, pouvait être toléré. Ceci dépend des conditions locales, et, surtout, de la résistance mécanique de la paroi étanche 2.

La matière de traitement garnissant chaque cellule de traitement est sujette à épuisement et peut nécessiter d'être remplacée périodiquement par une charge fraîche de matière de traitement. Cette opération de remplacement de la matière de traitement est facile à effectuer avec le système de l'invention, le haut de chaque cellule étant facilement accessible étant soit exposé à l'air libre soit sous une couverture amovible.

Il va de soi que le mode de réalisation décrit n'est qu'un exemple et qu'on pourrait le modifier, notamment par substitution d'équivalents techniques, sans sortir pour cela du cadre de l'invention défini dans les revendications ci-jointes.

## Revendications

1. Système de traitement de l'eau souterraine polluée provenant d'un site polluant isolé du site environnant par une paroi étanche (2) réalisée dans le sol, et d'évacuation de l'eau souterraine traitée vers le site environnant, qui comprend une tranchée drainante (10) s'étendant dans le site isolé et servant à collecter l'eau souterraine, au moins une cellule de traitement (22-24), prévue dans le sol, communiquant avec l'extrémité aval de la tranchée drainante et destinée à traiter l'eau collectée par ladite tranchée, et des moyens d'évacuation (30) de l'eau traitée dans le site environnant, caractérisé en ce que chaque cellule (22-24) est intercalée entre des panneaux (25-28) dans chacun desquels est prévu un passage (29) permettant à l'eau de s'écouler à travers ladite cellule, lesdits passages étant situés à des niveaux différents d'un panneau à l'autre.

2. Système selon la revendication 1, caractérisé en ce que le système comprend plusieurs cellules de traitement (22-24) distinctes, reliées en série, garnies de matières de traitement (31-33) perméables, similaires ou différentes.

3. Système selon la revendication 1 ou 2, caractérisé en ce que le système comporte un moyen (50) empêchant que de l'eau souterraine venant de l'extérieur du site ne s'écoule dans le site à travers la ou les cellules de traitement.

4. Système selon la revendication 1 ou 2, caractérisé en ce que la ou les cellules de traitement sont disposées entre deux parois étanches (2, 21) moulées dans le sol, sensiblement parallèles, délimitant un passage relié à une de ses extrémités à ladite tranchée drainante et à l'autre extrémité auxdits moyens d'évacuation.

5. Système selon la revendication 1, caractérisé en ce que les moyens d'évacuation de l'eau traitée comprennent une tranchée drainante (30) répartissant l'eau traitée dans le terrain du site environnant.

6. Système selon l'une quelconque des revendications 1 à 5, caractérisé en ce le système comporte, en outre, un passage supplémentaire (60) prévu à un niveau de la paroi étanche inférieur à celui de la nappe aquifère et en un point espacé du reste du système, ledit passage étant pourvu d'un moyen (61) ne laissant passer l'eau que de l'extérieur vers l'intérieur du site isolé.

7. Système selon la revendication 6, caractérisé en ce que ledit moyen est un clapet.

8. Système selon la revendication 6 ou 7, caractérisé en ce que ledit passage supplémentaire débouche à ses extrémités dans une tranchée (62, 63) remplie d'un matériau perméable à l'eau.

## Patentansprüche

1. System zur Behandlung von verunreinigtem Grundwasser, das von einer Verunreinigungsstelle kommt, die von der Umgebung durch eine in der Erde ausgebildete Dichtwand (2) isoliert ist, und zum Abführen von behandeltem Grundwasser zur Umgebung, mit einem sich in der isolierten Stelle erstreckenden und zum Sammeln des Grundwassers vorgesehenen Drainagegraben (10), wenigstens einer in der Erde vorgesehenen Behandlungszelle (22-24), die mit dem stromabwärtigen Ende des Drainagegrabens verbunden ist und der Behandlung des durch den Graben gesammelten Grundwassers dient, und einer Einrichtung zum Abführen (30) des behandelten Grundwassers in die Umgebung, dadurch gekennzeichnet, daß jede Zelle (22-24) zwischen Platten (25-28) angeordnet ist, in denen jeweils ein Durchlaß (29) vorgesehen ist, der Wasser das Fließen durch die Zelle ermöglicht, wobei die Durchlässe von einer Platte zur anderen auf unterschiedlichen Höhen angeordnet sind.

2. System nach Anspruch 1, dadurch gekennzeichnet, daß das System mehrere getrennte Behandlungszellen (22-24) aufweist, die in Reihe miteinander verbunden und mit ähnlichen oder unterschiedlichen Behandlungsmaterialien (31-33) versehen sind.

3. System nach Anspruch 1 oder 2, dadurch gekennzeichnet, daß das System eine Einrichtung (50) aufweist, die verhindert, daß von außerhalb der Stelle kommendes Grundwasser über die Behandlungszelle oder die Behandlungszellen in die Stelle strömt.

4. System nach Anspruch 1 oder 2, dadurch gekennzeichnet, daß die Behandlungszelle oder die Behandlungszellen zwischen zwei in der Erde gegossenen, im wesentlichen parallelen Dichtwänden (2, 21) angeordnet ist/sind, die einen Durchlass begrenzen, dessen eines Ende mit dem Drainagegraben und dessen anderes Ende mit der Abführungseinrichtung verbunden ist.

5. System nach Anspruch 1, dadurch gekennzeichnet, daß die Abführeinrichtung für behandeltes Grundwasser einen Drainagegraben (30) aufweist, der das behandelte Grundwasser im Boden der Umgebung verteilt.

6. System nach einem der Ansprüche 1 bis 5, dadurch gekennzeichnet, daß das System ferner einen zusätzlichen Durchlass (60) aufweist, der auf einer Höhe der Dichtwand angeordnet ist, die unter dem wasserführenden Horizont liegt, und der an einem vom Rest des Systems beabstandeten Punkt liegt, wobei der Durchlass mit einer Einrichtung (61) versehen ist, die Wasser nur von außen in das Innere der isolierten Stelle gelangen läßt.

7. System nach Anspruch 6, dadurch gekennzeichnet, daß die Einrichtung ein Ventil ist.

8. System nach Anspruch 6 oder 7, dadurch gekennzeichnet, daß der zusätzliche Durchlass an seinen Enden in einen Graben (62, 63) mündet, der mit einem wasserdurchlässigen Material gefüllt ist.

## Claims

1. A system for treating polluted underground water from a polluting site isolated from a surrounding site by a watertight wall (2) formed in the ground and for evacuating treated ground water to the surrounding site, which system includes a drainage trench (10) in the isolated site and used to collect ground water, at least one treatment cell (22-24) in the ground, communicating with the downstream end of the drainage trench and adapted to treat water collected by said trench, and means (30) for evacuating treated water into the surrounding site, characterized in that each cell (22-24) is situated between panels (25-28) in each of which there is a passage (29) enabling water to flow through said cell, said passages being at different levels from one panel to the other.

2. A system according to claim 1, characterized in that the system includes a plurality of separate treatment cells (22-24) connected in series and filled with similar or different permeable treatment materials (31-33).

3. A system according to claim 1 or claim 2, characterized in that the system includes means (50) for preventing ground water from outside the site from flowing into the site via the treatment cell or cells.

4. A system according to claim 1 or claim 2, characterized in that the treatment cells are disposed between two substantially parallel watertight walls (2, 21) cast in the ground and delimiting a passage connected at one end to said drainage trench and at the other end to said evacuation means.

5. A system according to claim 1, characterized in that the means for evacuating treated water include a drainage trench (30) distributing the treated water into the ground of the surrounding site.

6. A system according to any of claims 1 to 5, characterized in that the system further includes a supplementary passage (60) provided at a level of the watertight wall below that of the water-bearing ground and at a point spaced from the remainder of the system, said passage being provided with means (61) allowing water to flow only from the outside to the inside of the isolated site.

7. A system according to claim 6, characterized in that said means comprise a valve.

8. A system according to claim 6 or claim 7, characterized in that said supplementary passage opens at its ends into a trench (62, 63) filled with a water-permeable material.
